# EUROPEAN PATENT APPLICATION

(11) **EP 4 274 141 A1**
(43) Date of publication of application: **08.11.2023**
(21) Application number: 21914188.4
(22) Date of filing: 24.12.2021
(51) Int. Cl.: H04L 5/00, H04L 1/06, H04W 72/04

(54) **REFERENCE SIGNAL CONFIGURATION METHOD AND APPARATUS, ELECTRONIC DEVICE, AND READABLE STORAGE MEDIUM**

(30) Priority: 31.12.2020 CN 202011640522
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Conti, Marco
(86) International application number: PCT/CN2021/141158
(87) International publication number: WO 2022/143451

(57) **Abstract**

This application discloses a reference signal configuration method, a reference signal configuration apparatus, an electronic device, and a readable storage medium, and pertains to the field of communications. The reference signal configuration method includes: receiving multiple sets of configuration information of a reference signal; and determining, according to a preset rule, a reference signal configuration to be used by a terminal from the multiple sets of configuration information.

## Description

### CROSS-REFERENCE TO RELATED APPLICATIONS

This application claims priority to Chinese Patent Application No. 202011640522.X filed in China on December 31, 2020, which is incorporated herein by reference in its entirety.

### TECHNICAL FIELD

This application pertains to the field of communication technologies, and specifically relates to a reference signal configuration method, a reference signal configuration apparatus, an electronic device, and a readable storage medium.

### BACKGROUND

At present, some reference signals (for example, channel state information reference signal (Channel State Information-Reference Signal, CSI-RS)) can be configured for and used by only user terminals (User Equipment, UE) in a connected (connected) state, and are currently unusable for UE in an idle (idle) or inactive (inactive) state. In view of this, it is proposed in the related art that reference signals are configured for UE in an idle state by using a single set of configuration information configured using a single message such as a system message (system information, SI), a paging (paging) message, or a radio resource control (Radio Resource Control, RRC) signaling. However, the configuration of a single set of configuration information using a single message such as a system message, a paging message, or an RRC message leads to a problem that a terminal in an idle state waits for such long time that the terminal consumes too much power.

### SUMMARY

Embodiments of this application are intended to provide a reference signal configuration method, a reference signal configuration apparatus, an electronic device, and a readable storage medium, so as to solve the related-art problem that too much power consumption of a terminal in an idle or inactive state is caused when the terminal waits for too long due to configuration of a single set of configuration information using a single message.

To solve the foregoing technical problem, this application is implemented as follows.

According to a first aspect, an embodiment of this application provides a reference signal configuration method, where the reference signal configuration method includes:
receiving multiple sets of configuration information of a reference signal; and
determining, according to a preset rule, a reference signal configuration to be used by a terminal from the multiple sets of configuration information.

According to a second aspect, an embodiment of this application provides a reference signal configuration apparatus, where the reference signal configuration apparatus includes:
a receiving unit configured to receive multiple sets of configuration information of a reference signal; and
a determining unit configured to determine, according to a preset rule, a reference signal configuration to be used by a terminal from the multiple sets of configuration information.

According to a third aspect, an embodiment of this application provides an electronic device, where the electronic device includes a processor, a memory, and a program or instructions stored in the memory and capable of running on the processor, and when the program or the instructions are executed by the processor, the steps of the reference signal configuration method according to the first aspect are implemented.

According to a fourth aspect, an embodiment of this application provides a readable storage medium, where the readable storage medium stores a program or instructions, and when the program or the instructions are executed by a processor, the steps of the reference signal configuration method according to the first aspect are implemented.

According to a fifth aspect, an embodiment of this application provides a chip, where the chip includes a processor and a communication interface, the communication interface is coupled to the processor, and the processor is configured to run a program or instructions to implement the reference signal configuration method according to the first aspect.

According to a sixth aspect, a computer program product is provided, where the computer program product is stored in a non-volatile storage medium, and the computer program product is executed by at least one processor to implement the method according to the first aspect.

In the embodiments of this application, a method for configuring a reference signal for connected state for a terminal in an idle or inactive state is proposed. Specifically, the foregoing terminal is a terminal in an idle or inactive state, and after receiving the multiple sets of configuration information, the terminal in the idle or inactive state determines target configuration information from the multiple sets of configuration information according to the preset rule, and then the terminal in the idle or inactive state uses a reference signal configuration configured in the target configuration information. According to technical solutions in this application, a reference signal configuration is flexibly configured for the terminal in the idle or inactive state by using the multiple sets of configuration information. This improves the flexibility and effectiveness of reference signal configuration, and avoids that the terminal in the idle or inactive state waits for too long when only a single set of configuration information is used for providing a reference signal configuration, thereby saving power for the terminal.

### BRIEF DESCRIPTION OF DRAWINGS

FIG. 1 is a schematic flowchart of a reference signal configuration method according to an embodiment of this application;
FIG. 2 is a schematic block diagram of a reference signal configuration apparatus according to an embodiment of this application; and
FIG. 3 is a schematic block diagram of a hardware structure of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, in this specification and claims, "and/or" represents at least one of connected objects, and the character "/" generally represents an "or" relationship between the associated objects.

In the related art, reference signals are configured using a single message such as a system message, a paging message, or an RRC message. However, since a CSI-RS in an existing network is intended for a connected state and can be configured only for a terminal in a connected state, if the CSI-RS serving the terminal in the connected state is further configured for a terminal in an idle state through system information, when the network does not need to continue transmitting a CSI-RS for the terminal in the connected state or can configure a new CSI-RS for the terminal in the idle state, the terminal can be notified, only through system message change, to receive system information again. This affects other terminals that do not support a CSI-RS for idle state, and system message-based CSI-RS configuration cannot allow different CSI-RSs to be configured for different terminals respectively. If a CSI-RS is configured for a terminal in an idle state through a paging message (the paging message includes paging downlink control information (Downlink Control Information, DCI) and paging physical downlink shared channel (Physical Downlink Shared Channel, PDSCH)), a terminal that has switched from a connected state to an idle state can use the CSI-RS after the paging message is received. Therefore, the CSI-RS may be configured for the terminal in the idle state through an RRC release or suspend message, but the terminal may receive CSI-RSs configured using multiple messages. In an existing technical solution, dedicated signaling (dedicated signaling) overrides broadcast signaling (broadcast signaling), and therefore it is likely that the terminal in the idle state cannot obtain the latest CSI-RS configuration or a CSI-RS configuration cannot be dynamically changed for the terminal.

Apparently, in the related art, single message-based reference signal configuration for UE in an idle state is not flexible enough, and leads to a problem that a terminal in an idle state waits for such long time that the terminal consumes too much power.

Therefore, the embodiments of this application propose a reference signal configuration method, a reference signal configuration apparatus, an electronic device, and a readable storage medium to solve the foregoing technical problems. The following describes in detail the reference signal configuration method, the reference signal configuration apparatus, the electronic device, and the readable storage medium provided in the embodiments of this application by using specific embodiments and application scenarios thereof with reference to the accompanying drawings.

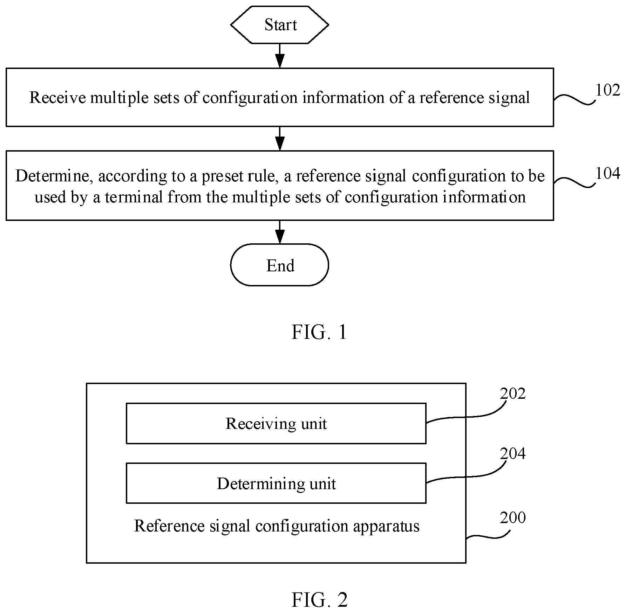

FIG. 1 is a schematic flowchart of a reference signal configuration method according to an embodiment of this application. The reference signal configuration method includes the following steps.

Step 102. Receive multiple sets of configuration information of a reference signal.

Step 104. Determine, according to a preset rule, a reference signal configuration to be used by a terminal from the multiple sets of configuration information.

In this embodiment, a method for configuring a reference signal for connected state for a terminal in an idle or inactive state is proposed. Specifically, the foregoing terminal is a terminal in an idle or inactive state, and after receiving the multiple sets of configuration information, the terminal in the idle or inactive state determines target configuration information from the multiple sets of configuration information according to the preset rule, and then the terminal in the idle or inactive state uses a reference signal configuration configured in the target configuration information. According to technical solutions in this application, with the multiple sets of configuration information, the reference signal configuration is flexibly configured for the terminal in the idle or inactive state. This improves the flexibility and effectiveness of reference signal configuration, and avoids that the terminal in the idle or inactive state waits for too long when only a single set of configuration information is used for providing a reference signal configuration, thereby saving power for the terminal.

The foregoing multiple sets of configuration information of a reference signal means that different values are configured for each of some or all of parameters of the corresponding reference signal. For example, the reference signal is configured with several parameters, where each of some or all of the parameters has multiple different values.

In some embodiments of this application, the multiple sets of configuration information are configured using at least one of the following messages: a system message, a paging message, and radio resource control signaling. That is, a network can obtain multiple sets of reference signal information for the terminal in the idle or inactive state by using at least one message of a system message, a paging message, an RRC message and reference signal information configured by the network for a terminal when the terminal is in a connected state.

The paging message includes at least one of an advance indication signal, paging DCI, a paging PDSCH, and a short message (short message). The advance indication signal includes at least one of a wake-up signal (Wake-up signal, WUS), a go-to-sleep (Go-to-Sleep) signal, DCI with CRC scrambled by power saving radio network temporary identifier (PS-Radio Network Temporary Identifier, PS-RNTI) (DCI with CRC scrambled by PS-RNTI, DCP), a paging response (response), a paging indication (indication), a paging early indication (Paging Early Indication, PEI). The RRC message includes an RRC release (release) message or an RRC suspend (suspend) message. The reference signal information configured by the network for the terminal when the terminal is in a connected state may be configured using an RRC configuration (configuration) message and/or an RRC reconfiguration (reconfiguration) message.

Specifically, the multiple sets of configuration information may be configured using one of the above messages or using multiple messages. When the multiple sets of configuration information are configured using multiple messages, it may be that one set of configuration information is configured using some of the messages, and more than one set of configuration information is configured using some of the messages.

The RRC reconfiguration message includes at least one of the following: reconfiguration (that is, asynchronous reconfiguration), handover command (Handover Command), mobility control information (Mobility Control Information), and synchronous reconfiguration (for example, reconfiguration with sync).

Configuration using the RRC message or RRC reconfiguration message specifically means that a reference signal configuration configured by the network for a terminal when the terminal is in the connected state can be used for the idle/inactive state as indicated by the network or prescribed by a protocol. Configuration using the RRC release message or RRC suspend message specifically means that a reference signal configuration configured by the network for a terminal when the terminal is released to the idle state or when the terminal is suspended (suspend) to the inactive state.

In some embodiments of this application, the reference signal is a reference signal configured by the network for a terminal in a connected state and may be collectively referred to as an additional reference signal. The reference signal includes at least one of the following: CSI-RS, synchronization system information block (Synchronization System information Block, SSB) (that is, second synchronization system information block), demodulation reference signal (Demodulation Reference Signal, DMRS), tracking reference signal (Tracking Reference Signal, TRS), positioning reference signal (Positioning Reference Signal, PRS), and the like. It should be noted that the SSB is different from an SSB received by a terminal currently in an idle or inactive state (that is, a first synchronization system information block).

It should be noted that in the related art, a reference signal configured by a network for a terminal in a connected state is unusable for a terminal in an idle or inactive state, while this application proposes the above method that enables UE in an idle or inactive state to use a reference signal for connected state. In addition, the terminal in the connected state and the terminal in the idle/inactive state herein may be the same or different. In other words, the network may configure the terminal in the idle/inactive state with a reference signal configuration that is configured for this terminal when the terminal is in the connected state, or configure the terminal with a reference signal configuration that is configured for another terminal when the another terminal is in the connected state, or with a reference signal configuration that is configured by the network for the connected state but not for a particular terminal.

In some embodiments of this application, the reference signal includes a reference signal resource or a set of reference signal resources, for example, a CSI-RS resource or a set of CSI-RS resources.

In some embodiments of this application, the step 104 of determining, according to a preset rule, a reference signal configuration to be used by a terminal from the multiple sets of configuration information includes: in a case that the multiple sets of configuration information are configured using the system message and the radio resource control signaling, using, by the terminal, a reference signal configuration configured in the radio resource control signaling.

In this embodiment, when a reference signal for the terminal in the idle or inactive state is configured using the system message and the radio resource control signaling, the terminal uses the reference signal configuration configured in the radio resource control signaling. In this embodiment of this application, the method for determining reference signal configuration is defined for the case that the reference signal configuration of the terminal in the idle or inactive state is configured using the system message and the radio resource control signaling, to guarantee the flexibility and effectiveness of reference signals and improve the configuration flexibility. In addition, the foregoing manner can avoid the problem that the terminal in the idle or inactive state waits for too long due to configuration of a single set of configuration information using a single message, thereby saving power for the terminal.

In some embodiments of this application, the in a case that the multiple sets of configuration information are configured using the system message and the radio resource control signaling, using, by the terminal, a reference signal configuration configured in the radio resource control signaling includes: in a case that the multiple sets of configuration information are configured using the system message and the radio resource control signaling and that the terminal satisfies a first preset condition, using, by the terminal, the reference signal configuration configured in the radio resource control signaling; where the first preset condition includes at least one of the following: being within a preset time after reception of the configuration information or being before a preset timer expires, the number of cell selections and/or reselections of the terminal after reception of the configuration information being less than or equal to a first number threshold, no tracking area update (Tracking Area Update, TAU) occurring after reception of the configuration information, and no radio access network notification area update (RAN Notification Area update, RNA update) occurring after reception of the configuration information.

In this embodiment, when a reference signal for the terminal in the idle or inactive state is configured using the system message and the radio resource control signaling, if the first preset condition is satisfied, the terminal uses the reference signal configuration configured in the radio resource control signaling. In this embodiment of this application, the method for determining reference signal configuration is defined for the case that the reference signal configuration of the terminal in the idle or inactive state is configured using the system message and the radio resource control signaling and that the first preset condition is satisfied, to guarantee the flexibility and effectiveness of reference signals, improve the configuration flexibility, and avoid the problem that the terminal in the idle or inactive state waits for such long time that the terminal consumes too much power.

The after reception of the configuration information in the first preset condition may specifically mean being after reception of an indication that the reference signal is configured using any one of the above messages, for example, after reception of an indication that the reference signal is configured using the system message or the paging message or the RRC message. When the RRC message is for configuration or reconfiguration, the after reception of the configuration information in the first preset condition specifically means being after the terminal receives an indication message indicating that a reference signal configuration in the configuration or reconfiguration message for the connected state is usable for the idle/inactive state.

In some embodiments of this application, the method further includes: in the case that the terminal uses the reference signal configuration configured in the radio resource control signaling, for a configuration parameter not included in the reference signal configuration in the radio resource control signaling, using, by the terminal, a reference signal configuration configured in the system message.

In this embodiment, in the case that the multiple sets of configuration information are configured using the system message and the radio resource control signaling and that the terminal uses the reference signal configuration configured in the radio resource control signaling, an adjustment may further be made based on a specific configuration in the radio resource control signaling. Specifically, if it is found that a configuration parameter or some configuration parameters of the reference signal are not included in the radio resource control signaling, the terminal may use such configuration parameters in the reference signal configuration configured in the system message. The foregoing manner guarantees the flexibility and effectiveness of the to-be-determined configuration parameter.

Specifically, an example is as follows: If parameter A is configured in both the system message and the radio resource control signaling, the configuration in the radio resource control signaling is used; if parameter B is configured only in the radio resource control signaling, the configuration in the radio resource control signaling is used; and if parameter C is configured only in the system message, the configuration in the system message is used.

In some embodiments of this application, the step 104 of determining, according to a preset rule, a reference signal configuration to be used by a terminal from the multiple sets of configuration information includes: in a case that the multiple sets of configuration information are configured using the system message and the radio resource control signaling, using, by the terminal, a reference signal configuration configured in the system message.

In this embodiment, when a reference signal for the terminal in the idle or inactive state is configured using the system message and the radio resource control signaling, the terminal uses the reference signal configuration configured in the system message. In this embodiment of this application, the method for determining reference signal configuration is defined for the case that the reference signal configuration of the terminal in the idle or inactive state is configured using the system message and the radio resource control signaling, to guarantee the flexibility and effectiveness of reference signals and improve the configuration flexibility. In addition, the foregoing manner can avoid the problem that the terminal in the idle or inactive state waits for too long due to configuration of a single set of configuration information using a single message, thereby saving power for the terminal.

In some embodiments of this application, the in a case that the multiple sets of configuration information are configured using the system message and the radio resource control signaling, using, by the terminal, a reference signal configuration configured in the system message includes: in a case that the multiple sets of configuration information are configured using the system message and the radio resource control signaling and that the terminal satisfies a second preset condition, using, by the terminal, the reference signal configuration configured in the system message; where the second preset condition includes at least one of the following: being after a preset time after reception of the configuration information or being after a preset timer expires, the number of cell selections and/or reselections of the terminal after reception of the configuration information being greater than a second number threshold, tracking area update occurring after reception of the configuration information, and radio access network notification area update occurring after reception of the configuration information.

In this embodiment, when a reference signal for the terminal in the idle or inactive state is configured using the system message and the radio resource control signaling, if the second preset condition is satisfied, the terminal uses the reference signal configuration configured in the system message. In this embodiment of this application, the method for determining reference signal configuration is defined for the case that the reference signal configuration of the terminal in the idle or inactive state is configured using the system message and the radio resource control signaling and that the second preset condition is satisfied, to guarantee the flexibility and effectiveness of reference signals, improve the configuration flexibility, and avoid the problem that the terminal in the idle or inactive state waits for such long time that the terminal consumes too much power.

The after reception of the configuration information in the second preset condition may specifically mean being after reception of an indication that the reference signal is configured using any one of the above messages, for example, after reception of an indication that the reference signal is configured using the system message or the paging message or the RRC message. When the RRC message is for configuration or reconfiguration, the after reception of the configuration information in the second preset condition specifically means being after the terminal receives an indication message indicating that a reference signal configuration in the configuration or reconfiguration message for the connected state is usable for the idle/inactive state.

In some embodiments of this application, the method further includes: in the case that the terminal uses the reference signal configuration configured in the system message, for a configuration parameter not included in the reference signal configuration in the system message, using, by the terminal, a reference signal configuration configured in the radio resource control signaling.

In this embodiment, in the case that the multiple sets of configuration information are configured using the system message and the radio resource control signaling and that the terminal uses the reference signal configuration configured in the system message, an adjustment may further be made based on a specific configuration in the system message. Specifically, if it is found that a configuration parameter or some configuration parameters of the reference signal are not included in the system message, the terminal may use such configuration parameters in the reference signal configuration configured in the radio resource control signaling. The foregoing manner guarantees the flexibility and effectiveness of the to-be-determined configuration parameter.

Specifically, an example is as follows: If parameter A is configured in both the system message and the radio resource control signaling, the configuration in the system message is used; if parameter B is configured only in the radio resource control signaling, the configuration in the radio resource control signaling is used; and if parameter C is configured only in the system message, the configuration in the system message is used.

In some embodiments of this application, the radio resource control signaling includes at least one of the following: radio resource control release message, radio resource control suspend message, radio resource control configuration message, and radio resource control reconfiguration message.

In a specific embodiment, when a CSI-RS is configured for the terminal in the idle or inactive state through the above system message and RRC message (that is, a radio resource control release message or a radio resource control suspend message), in a case that at least one of the following conditions is satisfied, the terminal in the idle or inactive state uses the CSI-RS configured using the RRC message, as specifically described below.
(1) Within a preset time after reception of the configuration information or before a preset timer expires, the CSI-RS configured using the RRC message is used, where duration of the preset timer is configured by a network or prescribed by a protocol.
(2) After reception of the configuration information but before a preset number N of cell selections and/or reselections occur, the CSI-RS configured using the RRC message is used, where the preset number N is configured by a network or prescribed by a protocol, and N > 1.
(3) After reception of the configuration information but before tracking area update occurs or radio access network notification area update occurs, the CSI-RS configured using the RRC message is used.

In addition, when at least one of the following conditions is satisfied, the terminal in the idle or inactive state uses the CSI-RS configured using the system message, as specifically described below.
(1) Within a preset time after reception of the configuration information or after a preset timer expires, the CSI-RS configured using the system message is used, where duration of the preset timer is configured by a network or prescribed by a protocol.
(2) After reception of the configuration information and after a preset number N of cell selections and/or reselections occur, the CSI-RS configured using the system message is used, where the preset number N is configured by a network or prescribed by a protocol, and N > 1.
(3) After reception of the configuration information and after tracking area update occurs or radio access network notification area update occurs, the CSI-RS configured using the system message is used.

Further, when a CSI-RS is configured for the terminal in the idle or inactive state through the above system message and RRC message, the following cases may be included.
(1) For parameter A, if a CSI-RS is configured in both the system message and the RRC message, the CSI-RS configured in the RRC message is used.
(2) For parameter B, if a CSI-RS is configured in the system message, and no CSI-RS is configured in the RRC message, the CSI-RS configured in the system message is used.
(3) For parameter C, if no CSI-RS is configured in the system message, and a CSI-RS is configured in the RRC message, the CSI-RS configured in the RRC message is used.

When a CSI-RS is configured for the terminal in the idle or inactive state through the above system message and a CSI-RS configured by a network for the terminal when the terminal is in the connected state, that is, when a CSI-RS is configured for the terminal in the idle state through the system message and a radio resource control configuration message or using the system message and a radio resource control reconfiguration message, in a case that at least one of the following conditions is satisfied, the terminal in the idle or inactive state uses the CSI-RS configured by the network for the terminal when the terminal is in the connected state, as specifically described below.
(1) Within a preset time after reception of the configuration information or before a preset timer expires, the CSI-RS configured by the network for the terminal when the terminal is in the connected state is used, where duration of the preset timer is configured by the network or prescribed by a protocol.
(2) After reception of the configuration information but before a preset number N of cell selections and/or reselections occur, the CSI-RS configured by the network for the terminal when the terminal is in the connected state is used, where the preset number N is configured by the network or prescribed by a protocol, and N ≥ 1.
(3) After reception of the configuration information but before tracking area update occurs or radio access network notification area update occurs, the CSI-RS configured by the network for the terminal when the terminal is in the connected state is used.

In addition, when at least one of the following conditions is satisfied, the terminal in the idle or inactive state uses the CSI-RS configured using the system message, as specifically described below.
(1) Within a preset time after reception of the configuration information or after a preset timer expires, the CSI-RS configured using the system message is used, where duration of the preset timer is configured by a network or prescribed by a protocol.
(2) After reception of the configuration information and after a preset number N of cell selections and/or reselections occur, the CSI-RS configured using the system message is used, where the preset number N is configured by a network or prescribed by a protocol, and N ≥ 1.
(3) After reception of the configuration information and after tracking area update occurs or radio access network notification area update occurs, the CSI-RS configured using the system message is used.

Further, when a CSI-RS is configured for the terminal in the idle or inactive state through the above system message and CSI-RS configured by the network for the terminal when the terminal is in the connected state, the following cases may be included.
(1) For parameter A, if a CSI-RS is configured both in the system message and by the network for the terminal when the terminal is in the connected state, the CSI-RS configured by the network for the terminal when the terminal is in the connected state is used.
(2) For parameter B, if a CSI-RS is configured in the system message, and no CSI-RS is configured by the network for the terminal when the terminal is in the connected state, the CSI-RS configured in the system message is used.
(3) For parameter C, if no CSI-RS is configured in the system message, and a CSI-RS is configured by the network for the terminal when the terminal is in the connected state, the CSI-RS configured by the network for the terminal when the terminal is in the connected state is used.

In some embodiments of this application, the step 104 of determining, according to a preset rule, a reference signal configuration to be used by a terminal from the multiple sets of configuration information includes: in a case that the multiple sets of configuration information are configured using the paging message and the radio resource control signaling, using, by the terminal, a reference signal configuration configured in the radio resource control signaling.

In this embodiment, when a reference signal for the terminal in the idle or inactive state is configured using the paging message and the radio resource control signaling, the terminal uses the reference signal configuration configured in the radio resource control signaling. In this embodiment of this application, the method for determining reference signal configuration is defined for the case that the reference signal configuration of the terminal in the idle or inactive state is configured using the paging message and the radio resource control signaling, to guarantee the flexibility and effectiveness of reference signals and improve the configuration flexibility. In addition, the foregoing manner can avoid the problem that the terminal in the idle or inactive state waits for too long due to configuration of a single set of configuration information using a single message, thereby saving power for the terminal.

In some embodiments of this application, the in a case that the multiple sets of configuration information are configured using the paging message and the radio resource control signaling, using, by the terminal, a reference signal configuration configured in the radio resource control signaling includes: in a case that the multiple sets of configuration information are configured using the paging message and the radio resource control signaling and that the terminal satisfies a third preset condition, using, by the terminal, the reference signal configuration configured in the radio resource control signaling; where the third preset condition includes at least one of the following: being within a preset time after reception of the configuration information or being before a preset timer expires, the number of cell selections and/or reselections of the terminal after reception of the configuration information being less than or equal to a third number threshold, no tracking area update occurring after reception of the configuration information, no radio access network notification area update occurring after reception of the configuration information, and no system message change indication or short message indication being received after reception of the configuration information.

In this embodiment, when a reference signal for the terminal in the idle or inactive state is configured using the paging message and the radio resource control signaling, if the third preset condition is satisfied, the terminal uses the reference signal configuration configured in the radio resource control signaling. In this embodiment of this application, the method for determining reference signal configuration is defined for the case that the reference signal configuration of the terminal in the idle or inactive state is configured using the paging message and the radio resource control signaling and that the third preset condition is satisfied, to guarantee the flexibility and effectiveness of reference signals, improve the configuration flexibility, and avoid the problem that the terminal in the idle or inactive state waits for such long time that the terminal consumes too much power.

The after reception of the configuration information in the third preset condition may specifically mean being after reception of an indication that the reference signal is configured using any one of the above messages, for example, after reception of an indication that the reference signal is configured using the system message or the paging message or the RRC message. When the RRC message is for configuration or reconfiguration, the after reception of the configuration information in the third preset condition specifically means being after the terminal receives an indication message indicating that a reference signal configuration in the configuration or reconfiguration message for the connected state is usable for the idle/inactive state.

In some embodiments of this application, the method further includes: in the case that the terminal uses the reference signal configuration configured in the radio resource control signaling, for a configuration parameter not included in the reference signal configuration in the radio resource control signaling, using, by the terminal, a reference signal configuration configured in the paging message.

In this embodiment, in the case that the multiple sets of configuration information are configured using the paging message and the radio resource control signaling and that the terminal uses the reference signal configuration configured in the radio resource control signaling, an adjustment may further be made based on a specific configuration in the radio resource control signaling. Specifically, if it is found that a configuration parameter or some configuration parameters of the reference signal are not included in the radio resource control signaling, the terminal may use such configuration parameters in the reference signal configuration configured in the paging message. The foregoing manner guarantees the flexibility and effectiveness of the to-be-determined configuration parameter.

Specifically, an example is as follows: If parameter A is configured in both the paging message and the radio resource control signaling, the configuration in the radio resource control signaling is used; if parameter B is configured only in the radio resource control signaling, the configuration in the radio resource control signaling is used; and if parameter C is configured only in the paging message, the configuration in the paging message is used.

In some embodiments of this application, the step 104 of determining, according to a preset rule, a reference signal configuration to be used by a terminal from the multiple sets of configuration information includes: in a case that the multiple sets of configuration information are configured using the paging message and the radio resource control signaling, using, by the terminal, a reference signal configuration configured in the paging message.

In this embodiment, when a reference signal for the terminal in the idle or inactive state is configured using the paging message and the radio resource control signaling, the terminal uses the reference signal configuration configured in the paging message. In this embodiment of this application, the method for determining reference signal configuration is defined for the case that the reference signal configuration of the terminal in the idle or inactive state is configured using the paging message and the radio resource control signaling, to guarantee the flexibility and effectiveness of reference signals and improve the configuration flexibility. In addition, the foregoing manner can avoid the problem that the terminal in the idle or inactive state waits for too long due to configuration of a single set of configuration information using a single message, thereby saving power for the terminal.

In some embodiments of this application, the in a case that the multiple sets of configuration information are configured using the paging message and the radio resource control signaling, using, by the terminal, a reference signal configuration configured in the paging message includes: in a case that the multiple sets of configuration information are configured using the paging message and the radio resource control signaling and that the terminal satisfies a fourth preset condition, using, by the terminal, the reference signal configuration configured in the paging message; where the fourth preset condition includes at least one of the following: being after a preset time after reception of the configuration information or being after a preset timer expires, the number of cell selections and/or reselections of the terminal after reception of the configuration information being greater than a fourth number threshold, tracking area update occurring after reception of the configuration information, radio access network notification area update occurring after reception of the configuration information, and being after reception of the configuration information and after a system message change indication or short message indication is received.

In this embodiment, when a reference signal for the terminal in the idle or inactive state is configured using the paging message and the radio resource control signaling, if the fourth preset condition is satisfied, the terminal uses the reference signal configuration configured in the paging message. In this embodiment of this application, the method for determining reference signal configuration is defined for the case that the reference signal configuration of the terminal in the idle or inactive state is configured using the paging message and the radio resource control signaling and that the fourth preset condition is satisfied, to guarantee the flexibility and effectiveness of reference signals, improve the configuration flexibility, and avoid the problem that the terminal in the idle or inactive state waits for such long time that the terminal consumes too much power.

The after reception of the configuration information in the fourth preset condition may specifically mean being after reception of an indication that the reference signal is configured using any one of the above messages, for example, after reception of an indication that the reference signal is configured using the system message or the paging message or the RRC message. When the RRC message is for configuration or reconfiguration, the after reception of the configuration information in the fourth preset condition specifically means being after the terminal receives an indication message indicating that a reference signal configuration in the configuration or reconfiguration message for the connected state is usable for the idle/inactive state.

In some embodiments of this application, the method further includes: in the case that the terminal uses the reference signal configuration configured in the paging message, for a configuration parameter not included in the reference signal configuration in the paging message, using, by the terminal, a reference signal configuration configured in the radio resource control signaling.

In this embodiment, in the case that the multiple sets of configuration information are configured using the paging message and the radio resource control signaling and that the terminal uses the reference signal configuration configured in the paging message, an adjustment may further be made based on a specific configuration in the paging message. Specifically, if it is found that a configuration parameter or some configuration parameters of the reference signal are not included in the paging message, the terminal may use such configuration parameters in the reference signal configuration configured in the radio resource control signaling. The foregoing manner guarantees the flexibility and effectiveness of the to-be-determined configuration parameter.

Specifically, an example is as follows: If parameter A is configured in both the paging message and the radio resource control signaling, the configuration in the paging message is used; if parameter B is configured only in the radio resource control signaling, the configuration in the radio resource control signaling is used; and if parameter C is configured only in the paging message, the configuration in the paging message is used.

In some embodiments of this application, the radio resource control signaling includes at least one of the following: radio resource control release message, radio resource control suspend message, radio resource control configuration message, and radio resource control reconfiguration message.

In a specific embodiment, when a CSI-RS is configured for the terminal in the idle or inactive state through the above paging message and RRC message (that is, a radio resource control release message or a radio resource control suspend message), in a case that at least one of the following conditions is satisfied, the terminal in the idle or inactive state uses the CSI-RS configured using the RRC message, as specifically described below.
(1) Within a preset time after reception of the configuration information or before a preset timer expires, the CSI-RS configured using the RRC message is used, where duration of the preset timer is configured by a network or prescribed by a protocol.
(2) After reception of the configuration information but before a preset number N of cell selections and/or reselections occur, the CSI-RS configured using the RRC message is used, where the preset number N is configured by a network or prescribed by a protocol, and N ≥ 1.
(3) After reception of the configuration information but before tracking area update occurs or radio access network notification area update occurs, the CSI-RS configured using the RRC message is used.
(4) After reception of the configuration information but before a system message change indication or short message indication is received, the CSI-RS configured using the RRC message is used.

In addition, when at least one of the following conditions is satisfied, the terminal in the idle or inactive state uses the CSI-RS configured using the paging message, as specifically described below.
(1) Within a preset time after reception of the configuration information or after a preset timer expires, the CSI-RS configured using the paging message is used, where duration of the preset timer is configured by a network or prescribed by a protocol.
(2) After reception of the configuration information and after a preset number N of cell selections and/or reselections occur, the CSI-RS configured using the paging message is used, where the preset number N is configured by a network or prescribed by a protocol, and N ≥ 1.
(3) After reception of the configuration information and after tracking area update occurs or radio access network notification area update occurs, the CSI-RS configured using the paging message is used.
(4) After reception of the configuration information and after a system message change indication or short message indication is received, the CSI-RS configured using the paging message is used.

Further, when a CSI-RS is configured for the terminal in the idle or inactive state through the above paging message and RRC message, the following cases may be included.
(1) For parameter A, if a CSI-RS is configured in both the paging message and the RRC message, the CSI-RS configured in the RRC message is used.
(2) For parameter B, if a CSI-RS is configured in the paging message, and no CSI-RS is configured in the RRC message, the CSI-RS configured in the paging message is used.
(3) For parameter C, if no CSI-RS is configured in the paging message, and a CSI-RS is configured in the RRC message, the CSI-RS configured in the RRC message is used.

When a CSI-RS is configured for the terminal in the idle or inactive state through the above paging message and a CSI-RS configured by a network for the terminal when the terminal is in the connected state, that is, when a CSI-RS is configured for the terminal in the idle state through the paging message and a radio resource control configuration message or using the paging message and a radio resource control reconfiguration message, in a case that at least one of the following conditions is satisfied, the terminal in the idle or inactive state uses the CSI-RS configured by the network for the terminal when the terminal is in the connected state, as specifically described below.
(1) Within a preset time after reception of the configuration information or before a preset timer expires, the CSI-RS configured by the network for the terminal when the terminal is in the connected state is used, where duration of the preset timer is configured by the network or prescribed by a protocol.
(2) After reception of the configuration information but before a preset number N of cell selections and/or reselections occur, the CSI-RS configured by the network for the terminal when the terminal is in the connected state is used, where the preset number N is configured by the network or prescribed by a protocol, and N ≥ 1.
(3) After reception of the configuration information but before tracking area update occurs or radio access network notification area update occurs, the CSI-RS configured by the network for the terminal when the terminal is in the connected state is used.
(4) After reception of the configuration information but before a system message change indication or short message indication is received, the CSI-RS configured by the network for the terminal when the terminal is in the connected state is used.

In addition, when at least one of the following conditions is satisfied, the terminal in the idle or inactive state uses the CSI-RS configured using the paging message, as specifically described below.
(1) Within a preset time after reception of the configuration information or after a preset timer expires, the CSI-RS configured using the paging message is used, where duration of the preset timer is configured by a network or prescribed by a protocol.
(2) After reception of the configuration information and after a preset number N of cell selections and/or reselections occur, the CSI-RS configured using the paging message is used, where the preset number N is configured by a network or prescribed by a protocol, and N ≥ 1.
(3) After reception of the configuration information and after tracking area update occurs or radio access network notification area update occurs, the CSI-RS configured using the paging message is used.
(4) After reception of the configuration information and after a system message change indication or short message indication is received, the CSI-RS configured using the paging message is used.

Further, when a CSI-RS is configured for the terminal in the idle or inactive state through the above paging message and CSI-RS configured by the network for the terminal when the terminal is in the connected state, the following cases may be included.
(1) For parameter A, if a CSI-RS is configured both in the paging message and by the network for the terminal when the terminal is in the connected state, the CSI-RS configured by the network for the terminal when the terminal is in the connected state is used.
(2) For parameter B, if a CSI-RS is configured in the paging message, and no CSI-RS is configured by the network for the terminal when the terminal is in the connected state, the CSI-RS configured in the paging message is used.
(3) For parameter C, if no CSI-RS is configured in the paging message, and a CSI-RS is configured by the network for the terminal when the terminal is in the connected state, the CSI-RS configured by the network for the terminal when the terminal is in the connected state is used.

In some embodiments of this application, the step 104 of determining, according to a preset rule, a reference signal configuration to be used by a terminal from the multiple sets of configuration information includes: in a case that the multiple sets of configuration information are configured using the system message and the paging message, using, by the terminal, a reference signal configuration configured in the paging message.

In this embodiment, when a reference signal for the terminal in the idle or inactive state is configured using the system message and the paging message, the terminal uses the reference signal configuration configured in the paging message. In this embodiment of this application, the method for determining reference signal configuration is defined for the case that the reference signal configuration of the terminal in the idle or inactive state is configured using the system message and the paging message, to guarantee the flexibility and effectiveness of reference signals and improve the configuration flexibility. In addition, the foregoing manner can avoid the problem that the terminal in the idle or inactive state waits for too long due to configuration of a single set of configuration information using a single message, thereby saving power for the terminal.

In some embodiments of this application, the in a case that the multiple sets of configuration information are configured using the system message and the paging message, using, by the terminal, a reference signal configuration configured in the paging message includes: in a case that the multiple sets of configuration information are configured using the system message and the paging message and that the terminal satisfies a fifth preset condition, using, by the terminal, the reference signal configuration configured in the paging message; where the fifth preset condition includes at least one of the following: being within a preset time after reception of the configuration information or being before a preset timer expires, the number of cell selections and/or reselections of the terminal after reception of the configuration information being less than or equal to a fifth number threshold, no tracking area update occurring after reception of the configuration information, no radio access network notification area update occurring after reception of the configuration information, and no system message change indication or short message indication being received after reception of the configuration information.

In this embodiment, when a reference signal for the terminal in the idle or inactive state is configured using the system message and the paging message, if the fifth preset condition is satisfied, the terminal uses the reference signal configuration configured in the paging message. In this embodiment of this application, the method for determining reference signal configuration is defined for the case that the reference signal configuration of the terminal in the idle or inactive state is configured using the paging message and the system message and that the fifth preset condition is satisfied, to guarantee the flexibility and effectiveness of reference signals, improve the configuration flexibility, and avoid the problem that the terminal in the idle or inactive state waits for such long time that the terminal consumes too much power.

The after reception of the configuration information in the fifth preset condition may specifically mean being after reception of an indication that the reference signal is configured using any one of the above messages, for example, after reception of an indication that the reference signal is configured using the system message or the paging message or the RRC message. When the RRC message is for configuration or reconfiguration, the after reception of the configuration information in the fifth preset condition specifically means being after the terminal receives an indication message indicating that a reference signal configuration in the configuration or reconfiguration message for the connected state is usable for the idle/inactive state.

In some embodiments of this application, the method further includes: in the case that the terminal uses the reference signal configuration configured in the paging message, for a configuration parameter not included in the reference signal configuration in the paging message, using, by the terminal, a reference signal configuration configured in the system message.

In this embodiment, in the case that the multiple sets of configuration information are configured using the system message and the paging message and that the terminal uses the reference signal configuration configured in the paging message, an adjustment may further be made based on a specific configuration in the paging message. Specifically, if it is found that a configuration parameter or some configuration parameters of the reference signal are not included in the paging message, the terminal may use such configuration parameters in the reference signal configuration configured in the system message. The foregoing manner guarantees the flexibility and effectiveness of the to-be-determined configuration parameter.

Specifically, an example is as follows: If parameter A is configured in both the system message and the paging message, the configuration in the paging message is used; if parameter B is configured only in the paging message, the configuration in the paging message is used; and if parameter C is configured only in the system message, the configuration in the system message is used.

In some embodiments of this application, the step 104 of determining, according to a preset rule, a reference signal configuration to be used by a terminal from the multiple sets of configuration information includes: in a case that the multiple sets of configuration information are configured using the system message and the paging message, using, by the terminal, a reference signal configuration configured in the system message.

In this embodiment, when a reference signal for the terminal in the idle or inactive state is configured using the system message and the paging message, the terminal uses the reference signal configuration configured in the system message. In this embodiment of this application, the method for determining reference signal configuration is defined for the case that the reference signal configuration of the terminal in the idle or inactive state is configured using the system message and the paging message, to guarantee the flexibility and effectiveness of reference signals and improve the configuration flexibility. In addition, the foregoing manner can avoid the problem that the terminal in the idle or inactive state waits for too long due to configuration of a single set of configuration information using a single message, thereby saving power for the terminal.

In some embodiments of this application, the in a case that the multiple sets of configuration information are configured using the system message and the paging message, using, by the terminal, a reference signal configuration configured in the system message includes: in a case that the multiple sets of configuration information are configured using the system message and the paging message and that the terminal satisfies a sixth preset condition, using, by the terminal, the reference signal configuration configured in the system message; where the sixth preset condition includes at least one of the following: being after a preset time after reception of the configuration information or being after a preset timer expires, the number of cell selections and/or reselections of the terminal after reception of the configuration information being greater than a sixth number threshold, tracking area update occurring after reception of the configuration information, radio access network notification area update occurring after reception of the configuration information, and being after reception of the configuration information and after a system message change indication or short message indication is received.

In this embodiment, when a reference signal for the terminal in the idle or inactive state is configured using the system message and the paging message, if the sixth preset condition is satisfied, the terminal uses the reference signal configuration configured in the system message. In this embodiment of this application, the method for determining reference signal configuration is defined for the case that the reference signal configuration of the terminal in the idle or inactive state is configured using the system message and the paging message and that the sixth preset condition is satisfied, to guarantee the flexibility and effectiveness of reference signals, improve the configuration flexibility, and avoid the problem that the terminal in the idle or inactive state waits for such long time that the terminal consumes too much power.

The after reception of the configuration information in the sixth preset condition may specifically mean being after reception of an indication that the reference signal is configured using any one of the above messages, for example, after reception of an indication that the reference signal is configured using the system message or the paging message or the RRC message. When the RRC message is for configuration or reconfiguration, the after reception of the configuration information in the sixth preset condition specifically means being after the terminal receives an indication message indicating that a reference signal configuration in the configuration or reconfiguration message for the connected state is usable for the idle/inactive state.

In some embodiments of this application, the method further includes: in the case that the terminal uses the reference signal configuration configured in the system message, for a configuration parameter not included in the reference signal configuration in the system message, using, by the terminal, a reference signal configuration configured in the paging message.

In this embodiment, in the case that the multiple sets of configuration information are configured using the system message and the paging message and that the terminal uses the reference signal configuration configured in the system message, an adjustment may further be made based on a specific configuration in the system message. Specifically, if it is found that a configuration parameter or some configuration parameters of the reference signal are not included in the system message, the terminal may use such configuration parameters in the reference signal configuration configured in the paging message. The foregoing manner guarantees the flexibility and effectiveness of the to-be-determined configuration parameter.

Specifically, an example is as follows: If parameter A is configured in both the system message and the paging message, the configuration in the system message is used; if parameter B is configured only in the paging message, the configuration in the paging message is used; and if parameter C is configured only in the system message, the configuration in the system message is used.

In a specific embodiment, when a CSI-RS is configured for the terminal in the idle or inactive state through the above system message and paging message, in a case that at least one of the following conditions is satisfied, the terminal in the idle or inactive state uses the CSI-RS configured using the paging message, as specifically described below.
(1) Within a preset time after reception of the configuration information or before a preset timer expires, the CSI-RS configured using the paging message is used, where duration of the preset timer is configured by a network or prescribed by a protocol.
(2) After reception of the configuration information but before a preset number N of cell selections and/or reselections occur, the CSI-RS configured using the paging message is used, where the preset number N is configured by a network or prescribed by a protocol, and N ≥ 1.
(3) After reception of the configuration information but before tracking area update occurs or radio access network notification area update occurs, the CSI-RS configured using the paging message is used.
(4) After reception of the configuration information but before a system message change indication or short message indication is received, the CSI-RS configured using the paging message is used.

In addition, when at least one of the following conditions is satisfied, the terminal in the idle or inactive state uses the CSI-RS configured using the system message, as specifically described below.
(1) Within a preset time after reception of the configuration information or after a preset timer expires, the CSI-RS configured using the system message is used, where duration of the preset timer is configured by a network or prescribed by a protocol.
(2) After reception of the configuration information and after a preset number N of cell selections and/or reselections occur, the CSI-RS configured using the system message is used, where the preset number N is configured by a network or prescribed by a protocol, and N ≥ 1.
(3) After reception of the configuration information and after tracking area update occurs or radio access network notification area update occurs, the CSI-RS configured using the system message is used.
(4) After reception of the configuration information and after a system message change indication or short message indication is received, the CSI-RS configured using the system message is used.

Further, when a CSI-RS is configured for the terminal in the idle or inactive state through the above system message and paging message, the following cases may be included.
(1) For parameter A, if a CSI-RS is configured in both the system message and the paging message, the CSI-RS configured in the paging message is used.
(2) For parameter B, if a CSI-RS is configured in the system message, and no CSI-RS is configured in the paging message, the CSI-RS configured in the system message is used.
(3) For parameter C, if no CSI-RS is configured in the system message, and a CSI-RS is configured in the paging message, the CSI-RS configured in the paging message is used.

In some embodiments of this application, the step 104 of determining, according to a preset rule, a reference signal configuration to be used by a terminal from the multiple sets of configuration information includes: using a first indication to indicate configuration information to be used by the terminal.

In this embodiment, the first indication is used to indicate a specific set of configuration information whose reference signal configuration is to be used by the terminal, thereby ensuring the flexibility and effectiveness of reference signals and improving the configuration flexibility.

For example, when a reference signal configuration for the terminal in the idle or inactive state is configured in all of a system message, a paging message, and radio resource control signaling, and when the first indication indicates the paging message, the terminal in the idle or inactive state uses a reference signal configuration in the paging message. The foregoing manner can avoid the problem that the terminal in the idle or inactive state waits for too long due to configuration of a single set of configuration information using a single message, thereby saving power for the terminal.

In some embodiments of this application, the first indication is carried in at least one of the following information: system message, advance indication signal, downlink control information for a paging message, physical downlink shared channel for a paging message, radio resource control release message, radio resource control suspend message, radio resource control configuration message, and radio resource control reconfiguration message. Specifically, some bits (bit) in the configuration information are used to carry the first indication.

In this embodiment, the terminal can receive the first indication in multiple manners, increasing the flexibility of receiving the first indication and ensuring that the first indication can be successfully received.

In some embodiments of this application, the configuration information includes some or all of configuration parameters of the reference signal.

In this embodiment, multiple reference signal configurations may be obtained from one set of configuration information or multiple sets of configuration information. The multiple reference signal configurations in one set of configuration information or multiple sets of configuration information refer to some or all of the configuration parameters of the reference signal. In this way, some or all of parameters of a reference signal of the terminal in the idle or inactive state can be configured as required, thus improving the flexibility of reference signal configuration.

It should be noted that the multiple reference signal configurations may be configured using one set of configuration information or obtained from more than one set of configuration information.

In some embodiments of this application, the method further includes transforming a reference signal configuration currently used by the terminal by using the some or all of the configuration parameters of the reference signal.

In this embodiment, since the configuration information includes the some or all of the configuration parameters of the reference signal, some or all of parameters of a reference signal configuration of the terminal in the idle or inactive state can be transformed as required, thus improving the flexibility of reference signal configuration.

For example, when configuration A of a CSI-RS by the terminal in the idle or inactive state is transformed into configuration B of the CSI-RS (for example, transformation is performed when different conditions are satisfied), a configuration manner includes one of the following.
(1) All of parameters of configuration A of the CSI-RS are replaced with parameters of configuration B of the CSI-RS. Specifically, if parameter X is configured in both configuration A and configuration B (that is, Xa and Xb), Xa needs to be replaced with Xb; if parameter Y is configured only in configuration A (that is, Ya) and not configured in configuration B (that is, no Yb), no configuration of parameter Y is present after transformation; and if parameter Z is configured only in configuration B (that is, Zb) and not configured in configuration A (that is, no Za), parameter Zb is used after transformation.
(2) Some of parameters of configuration A of the CSI-RS are replaced with parameters of configuration B of the CSI-RS. Specifically, if parameter X is configured in both configuration A and configuration B (that is, Xa and Xb), Xa needs to be replaced with Xb; if parameter Y is configured only in configuration A (that is, Ya) and not configured in configuration B (that is, no Yb), configuration of parameter Ya is to be used after transformation; and if parameter Z is configured only in configuration B (that is, Zb) and not configured in configuration A (that is, no Za), parameter Zb is used after transformation.

It should be noted that the reference signal configuration method provided in this embodiment of this application may be performed by a reference signal configuration apparatus or a control module for loading and performing the reference signal configuration method in the reference signal configuration apparatus. The embodiments of this application use the reference signal configuration apparatus loading and performing the reference signal configuration method as an example to describe the reference signal configuration apparatus provided in the embodiments of this application.

FIG. 2 is a schematic block diagram of a reference signal configuration apparatus 200 according to an embodiment of this application. The reference signal configuration apparatus 200 includes:
a receiving unit 202 configured to receive multiple sets of configuration information of a reference signal; and
a determining unit 204 configured to determine, according to a preset rule, a reference signal configuration to be used by a terminal from the multiple sets of configuration information.

In this embodiment, after receiving the multiple sets of configuration information, the terminal in an idle or inactive state determines target configuration information from the multiple sets of configuration information according to the preset rule, and then the terminal in the idle or inactive state uses a reference signal configuration configured in the target configuration information. According to technical solutions in this application, a reference signal configuration is flexibly configured for the terminal in the idle or inactive state by using the multiple sets of configuration information. This improves the flexibility and effectiveness of reference signal configuration, and avoids that the terminal in the idle or inactive state waits for too long when only a single set of configuration information is used for providing a reference signal configuration, thereby saving power for the terminal.

In some embodiments of this application, the multiple sets of configuration information are configured using at least one of the following messages: a system message, a paging message, and radio resource control signaling.

In some embodiments of this application, the determining unit 204 is specifically configured to: in a case that the multiple sets of configuration information are configured using the system message and the radio resource control signaling, use a reference signal configuration configured in the radio resource control signaling.

In some embodiments of this application, the determining unit 204 is specifically configured to: in a case that the multiple sets of configuration information are configured using the system message and the radio resource control signaling and that the terminal satisfies a first preset condition, use the reference signal configuration configured in the radio resource control signaling; where the first preset condition includes at least one of the following: being within a preset time after reception of the configuration information or being before a preset timer expires, the number of cell selections and/or reselections of the terminal after reception of the configuration information being less than or equal to a first number threshold, no tracking area update occurring after reception of the configuration information, and no radio access network notification area update occurring after reception of the configuration information.

In some embodiments of this application, the determining unit 204 is further configured to: in the case that the terminal uses the reference signal configuration configured in the radio resource control signaling, for a configuration parameter not included in the reference signal configuration in the radio resource control signaling, use a reference signal configuration configured in the system message.

In some embodiments of this application, the determining unit 204 is specifically configured to: in a case that the multiple sets of configuration information are configured using the system message and the radio resource control signaling, use a reference signal configuration configured in the system message.

In some embodiments of this application, the determining unit 204 is specifically configured to: in a case that the multiple sets of configuration information are configured using the system message and the radio resource control signaling and that the terminal satisfies a second preset condition, use the reference signal configuration configured in the system message; where the second preset condition includes at least one of the following: being after a preset time after reception of the configuration information or being after a preset timer expires, the number of cell selections and/or reselections of the terminal after reception of the configuration information being greater than a second number threshold, tracking area update occurring after reception of the configuration information, and radio access network notification area update occurring after reception of the configuration information.

In some embodiments of this application, the determining unit 204 is further configured to: in the case that the terminal uses the reference signal configuration configured in the system message, for a configuration parameter not included in the reference signal configuration in the system message, use a reference signal configuration configured in the radio resource control signaling.

In some embodiments of this application, the determining unit 204 is specifically configured to: in a case that the multiple sets of configuration information are configured using the paging message and the radio resource control signaling, use a reference signal configuration configured in the radio resource control signaling.

In some embodiments of this application, the determining unit 204 is specifically configured to: in a case that the multiple sets of configuration information are configured using the paging message and the radio resource control signaling and that the terminal satisfies a third preset condition, use the reference signal configuration configured in the radio resource control signaling; where the third preset condition includes at least one of the following: being within a preset time after reception of the configuration information or being before a preset timer expires, the number of cell selections and/or reselections of the terminal after reception of the configuration information being less than or equal to a third number threshold, no tracking area update occurring after reception of the configuration information, no radio access network notification area update occurring after reception of the configuration information, and no system message change indication or short message indication being received after reception of the configuration information.

In some embodiments of this application, the determining unit 204 is further configured to: in the case that the terminal uses the reference signal configuration configured in the radio resource control signaling, for a configuration parameter not included in the reference signal configuration in the radio resource control signaling, use a reference signal configuration configured in the paging message.

In some embodiments of this application, the determining unit 204 is specifically configured to: in a case that the multiple sets of configuration information are configured using the paging message and the radio resource control signaling, use a reference signal configuration configured in the paging message.

In some embodiments of this application, the determining unit 204 is specifically configured to: in a case that the multiple sets of configuration information are configured using the paging message and the radio resource control signaling and that the terminal satisfies a fourth preset condition, use the reference signal configuration configured in the paging message; where the fourth preset condition includes at least one of the following: being after a preset time after reception of the configuration information or being after a preset timer expires, the number of cell selections and/or reselections of the terminal after reception of the configuration information being greater than a fourth number threshold, tracking area update occurring after reception of the configuration information, radio access network notification area update occurring after reception of the configuration information, and being after reception of the configuration information and after a system message change indication or short message indication is received.

In some embodiments of this application, the determining unit 204 is further configured to: in the case that the terminal uses the reference signal configuration configured in the paging message, for a configuration parameter not included in the reference signal configuration in the paging message, use a reference signal configuration configured in the radio resource control signaling.

In some embodiments of this application, the radio resource control signaling includes at least one of the following: radio resource control release message, radio resource control suspend message, radio resource control configuration message, and radio resource control reconfiguration message.

In some embodiments of this application, the determining unit 204 is specifically configured to: in a case that the multiple sets of configuration information are configured using the system message and the paging message, use a reference signal configuration configured in the paging message.

In some embodiments of this application, the determining unit 204 is specifically configured to: in a case that the multiple sets of configuration information are configured using the system message and the paging message and that the terminal satisfies a fifth preset condition, use the reference signal configuration configured in the paging message; where the fifth preset condition includes at least one of the following: being within a preset time after reception of the configuration information or being before a preset timer expires, the number of cell selections and/or reselections of the terminal after reception of the configuration information being less than or equal to a fifth number threshold, no tracking area update occurring after reception of the configuration information, no radio access network notification area update occurring after reception of the configuration information, and no system message change indication or short message indication being received after reception of the configuration information.

In some embodiments of this application, the determining unit 204 is further configured to: in the case that the terminal uses the reference signal configuration configured in the paging message, for a configuration parameter not included in the reference signal configuration in the paging message, use a reference signal configuration configured in the system message.

In some embodiments of this application, the determining unit 204 is specifically configured to: in a case that the multiple sets of configuration information are configured using the system message and the paging message, use a reference signal configuration configured in the system message.

In some embodiments of this application, the determining unit 204 is specifically configured to: in a case that the multiple sets of configuration information are configured using the system message and the paging message and that the terminal satisfies a sixth preset condition, use the reference signal configuration configured in the system message; where the sixth preset condition includes at least one of the following: being after a preset time after reception of the configuration information or being after a preset timer expires, the number of cell selections and/or reselections of the terminal after reception of the configuration information being greater than a sixth number threshold, tracking area update occurring after reception of the configuration information, radio access network notification area update occurring after reception of the configuration information, and being after reception of the configuration information and after a system message change indication or short message indication is received.

In some embodiments of this application, the determining unit 204 is further configured to: in the case that the terminal uses the reference signal configuration configured in the system message, for a configuration parameter not included in the reference signal configuration in the system message, use a reference signal configuration configured in the paging message.

In some embodiments of this application, the determining unit 204 is specifically configured to use a first indication to indicate configuration information to be used by the terminal.

In some embodiments of this application, the first indication is carried in at least one of the following information: system message, advance indication signal, downlink control information for a paging message, physical downlink shared channel for a paging message, radio resource control release message, radio resource control suspend message, radio resource control configuration message, and radio resource control reconfiguration message.

In some embodiments of this application, the configuration information includes some or all of configuration parameters of the reference signal.

In some embodiments of this application, the reference signal configuration apparatus further includes a transforming unit configured to transform a reference signal configuration currently used by the terminal by using the some or all of the configuration parameters of the reference signal.

In some embodiments of this application, the reference signal is a reference signal configured by a network for a terminal in a connected state.

In some embodiments of this application, the reference signal includes at least one of the following: channel state information reference signal, demodulation reference signal, tracking reference signal, positioning reference signal, and second synchronization system information block, the second synchronization system information block being different from a first synchronization system information block received by a terminal in an idle state.

The reference signal configuration apparatus in this embodiment of this application may be an apparatus or may be a component, an integrated circuit, or a chip in the terminal. The apparatus may be a mobile electronic device or may be a non-mobile electronic device. For example, the mobile electronic device may be a mobile phone, a tablet computer, a notebook computer, a palmtop computer, an in-vehicle electronic device, a wearable device, an ultra-mobile personal computer (Ultra-Mobile Personal Computer, UMPC), a netbook, a personal digital assistant (Personal Digital Assistant, PDA), or the like. The non-mobile electronic device may be a server, a network-attached storage (Network Attached Storage, NAS), a personal computer (Personal Computer, PC), a television (Television, TV), a teller machine, a self-service machine, or the like. This is not specifically limited in this embodiment of this application.

The reference signal configuration apparatus in this embodiment of this application may be an apparatus with an operating system. The operating system may be an Android (Android) operating system, may be an iOS operating system, or may be another possible operating system. This is not specifically limited in this embodiment of this application.

The reference signal configuration apparatus provided in this embodiment of this application can implement the processes implemented by the reference signal configuration apparatus in the embodiment of the reference signal configuration method in FIG. 1. To avoid repetition, details are not described herein again.

Optionally, an embodiment of this application further provides an electronic device 300 including a processor 320, a memory 318, and a program or instructions stored in the memory 318 and capable of running on the processor 320. When the program or the instructions are executed by the processor 320, the processes of the foregoing embodiments of the reference signal configuration method are implemented, with the same technical effects achieved. To avoid repetition, details are not described herein again.

It should be noted that the electronic device in this embodiment of this application includes the aforementioned mobile electronic device and non-mobile electronic device.

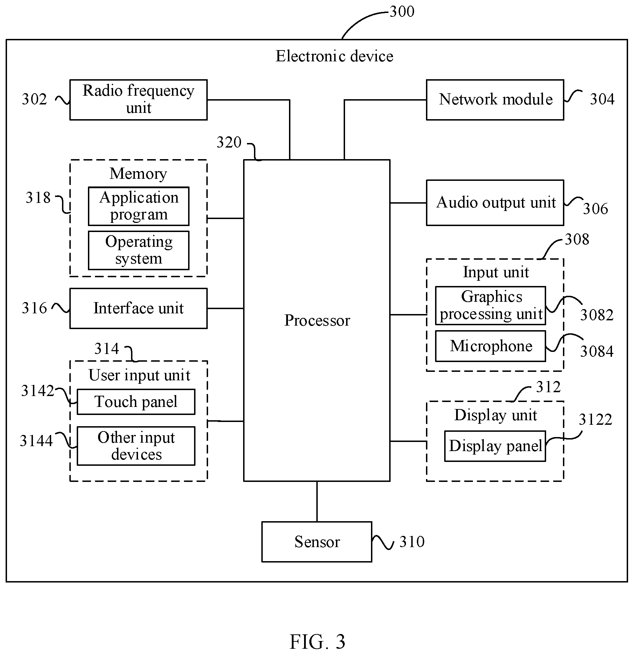

FIG. 3 is a schematic block diagram of a hardware structure of the electronic device 300 for implementing the embodiments of this application.

The electronic device 300 includes but is not limited to components such as a radio frequency unit 302, a network module 304, an audio output unit 306, an input unit 308, a sensor 310, a display unit 312, a user input unit 314, an interface unit 316, a memory 318, and a processor 320.

Persons skilled in the art can understand that the electronic device 300 may further include a power supply (for example, a battery) for supplying power to the components. The power supply may be logically connected to the processor 320 through a power management system. In this way, functions such as charge management, discharge management, and power consumption management are implemented by using the power management system. The structure of the electronic device shown in FIG. 3 does not constitute any limitation on the electronic device. The electronic device may include more or fewer components than shown in the figure, or combine some components, or have different component arrangements. Details are not described herein.

The radio frequency unit 302 is configured to receive multiple sets of configuration information of a reference signal. The processor 320 is configured to determine, according to a preset rule, a reference signal configuration to be used by a terminal from the multiple sets of configuration information.

In this embodiment, after receiving the multiple sets of configuration information, the terminal in an idle or inactive state determines target configuration information from the multiple sets of configuration information according to the preset rule, and then the terminal in the idle or inactive state uses a reference signal configuration configured in the target configuration information. According to technical solutions in this application, a reference signal configuration is flexibly configured for the terminal in the idle or inactive state by using the multiple sets of configuration information. This improves the flexibility and effectiveness of reference signal configuration, and avoids that the terminal in the idle or inactive state waits for too long when only a single set of configuration information is used for providing a reference signal configuration, thereby saving power for the terminal.

Further, the multiple sets of configuration information are configured using at least one of the following messages: a system message, a paging message, and radio resource control signaling.

Further, the processor 320 is specifically configured to: in a case that the multiple sets of configuration information are configured using the system message and the radio resource control signaling, use a reference signal configuration configured in the radio resource control signaling.

Further, the processor 320 is specifically configured to: in a case that the multiple sets of configuration information are configured using the system message and the radio resource control signaling and that the terminal satisfies a first preset condition, use the reference signal configuration configured in the radio resource control signaling; where the first preset condition includes at least one of the following: being within a preset time after reception of the configuration information or being before a preset timer expires, the number of cell selections and/or reselections of the terminal after reception of the configuration information being less than or equal to a first number threshold, no tracking area update occurring after reception of the configuration information, and no radio access network notification area update occurring after reception of the configuration information.

Further, the processor 320 is further configured to: in the case that the terminal uses the reference signal configuration configured in the radio resource control signaling, for a configuration parameter not included in the reference signal configuration in the radio resource control signaling, use a reference signal configuration configured in the system message.

Further, the processor 320 is specifically configured to: in a case that the multiple sets of configuration information are configured using the system message and the radio resource control signaling, use a reference signal configuration configured in the system message.

Further, the processor 320 is specifically configured to: in a case that the multiple sets of configuration information are configured using the system message and the radio resource control signaling and that the terminal satisfies a second preset condition, use the reference signal configuration configured in the system message; where the second preset condition includes at least one of the following: being after a preset time after reception of the configuration information or being after a preset timer expires, the number of cell selections and/or reselections of the terminal after reception of the configuration information being greater than a second number threshold, tracking area update occurring after reception of the configuration information, and radio access network notification area update occurring after reception of the configuration information.

Further, the processor 320 is further configured to: in the case that the terminal uses the reference signal configuration configured in the system message, for a configuration parameter not included in the reference signal configuration in the system message, use a reference signal configuration configured in the radio resource control signaling.

Further, the processor 320 is specifically configured to: in a case that the multiple sets of configuration information are configured using the paging message and the radio resource control signaling, use a reference signal configuration configured in the radio resource control signaling.

Further, the processor 320 is specifically configured to: in a case that the multiple sets of configuration information are configured using the paging message and the radio resource control signaling and that the terminal satisfies a third preset condition, use the reference signal configuration configured in the radio resource control signaling; where the third preset condition includes at least one of the following: being within a preset time after reception of the configuration information or being before a preset timer expires, the number of cell selections and/or reselections of the terminal after reception of the configuration information being less than or equal to a third number threshold, no tracking area update occurring after reception of the configuration information, no radio access network notification area update occurring after reception of the configuration information, and no system message change indication or short message indication being received after reception of the configuration information.

Further, the processor 320 is further configured to: in the case that the terminal uses the reference signal configuration configured in the radio resource control signaling, for a configuration parameter not included in the reference signal configuration in the radio resource control signaling, use a reference signal configuration configured in the paging message.

Further, the processor 320 is specifically configured to: in a case that the multiple sets of configuration information are configured using the paging message and the radio resource control signaling, use a reference signal configuration configured in the paging message.

Further, the processor 320 is specifically configured to: in a case that the multiple sets of configuration information are configured using the paging message and the radio resource control signaling and that the terminal satisfies a fourth preset condition, use the reference signal configuration configured in the paging message; where the fourth preset condition includes at least one of the following: being after a preset time after reception of the configuration information or being after a preset timer expires, the number of cell selections and/or reselections of the terminal after reception of the configuration information being greater than a fourth number threshold, tracking area update occurring after reception of the configuration information, radio access network notification area update occurring after reception of the configuration information, and being after reception of the configuration information and after a system message change indication or short message indication is received.

Further, the processor 320 is further configured to: in the case that the terminal uses the reference signal configuration configured in the paging message, for a configuration parameter not included in the reference signal configuration in the paging message, use a reference signal configuration configured in the radio resource control signaling.

Further, the radio resource control signaling includes at least one of the following: radio resource control release message, radio resource control suspend message, radio resource control configuration message, and radio resource control reconfiguration message.

Further, the processor 320 is specifically configured to: in a case that the multiple sets of configuration information are configured using the system message and the paging message, use a reference signal configuration configured in the paging message.

Further, the processor 320 is specifically configured to: in a case that the multiple sets of configuration information are configured using the system message and the paging message and that the terminal satisfies a fifth preset condition, use the reference signal configuration configured in the paging message; where the fifth preset condition includes at least one of the following: being within a preset time after reception of the configuration information or being before a preset timer expires, the number of cell selections and/or reselections of the terminal after reception of the configuration information being less than or equal to a fifth number threshold, no tracking area update occurring after reception of the configuration information, no radio access network notification area update occurring after reception of the configuration information, and no system message change indication or short message indication being received after reception of the configuration information.

Further, the processor 320 is further configured to: in the case that the terminal uses the reference signal configuration configured in the paging message, for a configuration parameter not included in the reference signal configuration in the paging message, use a reference signal configuration configured in the system message.

Further, the processor 320 is specifically configured to: in a case that the multiple sets of configuration information are configured using the system message and the paging message, use a reference signal configuration configured in the system message.

Further, the processor 320 is specifically configured to: in a case that the multiple sets of configuration information are configured using the system message and the paging message and that the terminal satisfies a sixth preset condition, use the reference signal configuration configured in the system message; where the sixth preset condition includes at least one of the following: being after a preset time after reception of the configuration information or being after a preset timer expires, the number of cell selections and/or reselections of the terminal after reception of the configuration information being greater than a sixth number threshold, tracking area update occurring after reception of the configuration information, radio access network notification area update occurring after reception of the configuration information, and being after reception of the configuration information and after a system message change indication or short message indication is received.

Further, the processor 320 is further configured to: in the case that the terminal uses the reference signal configuration configured in the system message, for a configuration parameter not included in the reference signal configuration in the system message, use a reference signal configuration configured in the paging message.

Further, the processor 320 is specifically configured to use a first indication to indicate configuration information to be used by the terminal.

Further, the first indication is carried in at least one of the following information: system message, advance indication signal, downlink control information for a paging message, physical downlink shared channel for a paging message, radio resource control release message, radio resource control suspend message, radio resource control configuration message, and radio resource control reconfiguration message.

Further, the configuration information includes some or all of configuration parameters of the reference signal.

Further, the processor 320 is further configured to transform a reference signal configuration currently used by the terminal by using the some or all of the configuration parameters of the reference signal.

Further, the reference signal is a reference signal configured by a network for a terminal in a connected state.

Further, the reference signal includes at least one of the following: channel state information reference signal, demodulation reference signal, tracking reference signal, positioning reference signal, and second synchronization system information block, the second synchronization system information block being different from a first synchronization system information block received by a terminal in an idle state.

It should be understood that in this embodiment of this application, the radio frequency unit 302 may be configured to transmit and receive information, or to transmit and receive signals in a call process, and specifically, receive downlink data from a base station or transmit uplink data to the base station. The radio frequency unit 302 includes but is not limited to an antenna, at least one amplifier, a transceiver, a coupler, a low noise amplifier, and a duplexer.

The network module 304 provides a user with wireless broadband internet access, for example, helping the user to send and receive e-mails, browse web pages, and access streaming media.

The audio output unit 306 may convert audio data received by the radio frequency unit 302 or the network module 304 or stored in the memory 318 into an audio signal and output the audio signal as a sound. Furthermore, the audio output unit 306 may further provide audio output (for example, a call signal received sound or a message received sound) related to a specific function performed by the electronic device 300. The audio output unit 306 includes a speaker, a buzzer, a telephone receiver, and the like.

The input unit 308 is configured to receive an audio or video signal. The input unit 308 may include a graphics processing unit (Graphics Processing Unit, GPU) 3082 and a microphone 3084, and the graphics processing unit 3082 processes image data of a still picture or video obtained by an image capture apparatus (for example, a camera) in an image capture mode or video capture mode. A processed image frame may be displayed on the display unit 312 or stored in the memory 318 (or other storage media) or sent by the radio frequency unit 302 or the network module 304. The microphone 3084 is capable of receiving sounds and processing such sounds into audio data. Under a telephone call mode, the processed audio data can be converted into a format that can be sent as an output to a mobile communication base station by the radio frequency unit 302.

The electronic device 300 further includes at least one sensor 310, for example, a fingerprint sensor, a pressure sensor, an iris sensor, a molecular sensor, a gyroscope, a barometer, a hygrometer, a thermometer, an infrared sensor, an optical sensor, a motion sensor, and other sensors.

The display unit 312 is configured to display information input by the user or information provided to the user. The display unit 312 may include a display panel 3122, and the display panel 3122 may be configured in a form of a liquid crystal display, an organic light-emitting diode display, or the like.

The user input unit 314 may be configured to receive input digit or character information and generate key signal input related to user setting and function control of the electronic device. Specifically, the user input unit 314 includes a touch panel 3142 and other input devices 3144. The touch panel 3142 is also referred to as a touchscreen and can collect a touch operation of the user on or near the touch panel 3142. The touch panel 3142 may include two parts: a touch detection apparatus and a touch controller. The touch detection apparatus detects a touch position of the user, detects a signal brought by a touch operation, and transmits the signal to the touch controller. The touch controller receives touch information from the touch detection apparatus, converts the touch information to point coordinates, and sends the point coordinates to the processor 320, and receives and executes a command sent by the processor 320. The other input devices 3144 may include but are not limited to a physical keyboard, a functional button (for example, a volume control button or a power on/off button), a trackball, a mouse, and a joystick. Details are not described herein.

Further, the touch panel 3142 may cover the display panel 3122. After detecting a touch operation on or near the touch panel 3142, the touch panel 3142 transmits information about the touch operation to the processor 320 for the processor 320 to determine a touch event type, and then the processor 320 provides a corresponding visual output on the display panel 3122 based on the touch event type. The touch panel 3142 and the display panel 3122 may act as two separate parts or may be integrated into one part.

The interface unit 316 is an interface connecting an external apparatus to the electronic device 300. For example, the external apparatus may include a wired or wireless headphone port, an external power (or battery charger) port, a wired or wireless data port, a memory card port, a port for connecting an apparatus provided with a recognition module, an audio input/output (I/O) port, a video I/O port, an earphone port, and the like. The interface unit 316 may be configured to receive input (for example, data information and power) from an external apparatus and transmit the received input to one or more elements in the electronic device 300 or may be configured to transmit data between the electronic device 300 and the external apparatus.

The memory 318 may be configured to store a software program and various data. The memory 318 may mainly include a program storage area and a data storage area. The program storage area may store an operating system, an application program required for at least one function (for example, a sound play function and an image play function), and the like. The data storage area may store data created based on use of the electronic device 300 (for example, audio data and a phone book), and the like. In addition, the memory 318 may include a high-speed random access memory, or may further include a non-volatile memory, for example, at least one magnetic disk storage device, flash memory device, or another volatile solid-state storage device.

The processor 320 performs various functions and data processing of the electronic device 300 by running or executing the software program and/or module stored in the memory 318 and invoking data stored in the memory 318, thereby performing overall monitoring on the electronic device 300. The processor 320 may include one or more processing units. The processor 320 may integrate an application processor and a modem processor. The application processor mainly processes an operating system, a user interface, an application program, and the like. The modem processor mainly processes wireless communication.

An embodiment of this application further provides a readable storage medium, where the readable storage medium stores a program or instructions, and when the program or the instructions are executed by a processor, the processes of the foregoing embodiments of the reference signal configuration method are implemented, with the same technical effects achieved. To avoid repetition, details are not described herein again.

The processor is the processor in the electronic device in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing embodiments of the reference signal configuration method, with the same technical effects achieved. To avoid repetition, details are not described herein again.

An embodiment of this application further provides a computer program product, where the computer program product is stored in a non-volatile storage medium, and the computer program product is executed by at least one processor to implement the processes of the foregoing embodiments of the reference signal configuration method, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such process, method, article, or apparatus. In absence of more constraints, an element defined by "including a ..." does not exclude another same element in the process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

Persons of ordinary skill in the art may realize that units and algorithm steps in various examples described with reference to the embodiments disclosed in this specification can be implemented by using electronic hardware or a combination of computer software and electronic hardware. Whether the functions are performed by hardware or software depends on particular application and design constraints of the technical solutions. Persons skilled in the art may use different methods to implement the described functions for each particular application, but it should not be considered that the implementation goes beyond the scope of the embodiments of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be in electrical, mechanical, or other forms.

The units described as separate parts may or may not be physically separate. Components displayed as units may or may not be physical units, that is, they may be located in one position or may be distributed on a plurality of network units. Some or all of the units may be selected based on actual requirements to achieve the objectives of the solutions of the embodiments.

In addition, the functional units in the embodiments of the present disclosure may be integrated into one processing unit, or each of the units may exist alone physically, or two or more units may be integrated into one unit.

When implemented in a form of a software functional unit and sold or used as an independent product, the functions may be stored in a computer-readable storage medium. Based on such an understanding, the technical solutions of this disclosure essentially, or the part contributing to the prior art, or some of the technical solutions may be implemented in a form of a software product. The computer software product is stored in a storage medium and includes several instructions for instructing a computer device (which may be a personal computer, a server, a network device, or the like) to perform all or some of the steps of the method described in the embodiments of this disclosure. The preceding storage medium includes any medium capable of storing program code, such as a USB flash drive, a removable hard disk, a ROM, a RAM, a magnetic disk, or an optical disc.

Persons of ordinary skill in the art may understand that all or some of the processes of the method in the foregoing embodiments may be implemented by a computer program controlling relevant hardware. The program may be stored in a computer readable storage medium. When the program runs, the processes of the method embodiments may be included. The storage medium may be a magnetic disk, an optical disc, a ROM, a RAM, or the like.

The embodiments of this application are described above with reference to the accompanying drawings, but this application is not limited to the foregoing implementations. The foregoing implementations are only illustrative rather than restrictive. Inspired by this application, persons of ordinary skill in the art can still derive many variations without departing from the essence of this application and the protection scope of the claims. All these variations shall fall within the protection of this application.

## Claims

1. A reference signal configuration method, applied to a terminal, wherein the configuration method comprises:
receiving multiple sets of configuration information of a reference signal; and
determining, according to a preset rule, a reference signal configuration to be used by the terminal from the multiple sets of configuration information.

2. The reference signal configuration method according to claim 1, wherein the multiple sets of configuration information are configured using at least one of the following messages: a system message, a paging message, and radio resource control signaling.

3. The reference signal configuration method according to claim 2, wherein the determining, according to a preset rule, a reference signal configuration to be used by the terminal from the multiple sets of configuration information comprises:
in a case that the multiple sets of configuration information are configured using the system message and the radio resource control signaling, using, by the terminal, a reference signal configuration configured in the radio resource control signaling.

4. The reference signal configuration method according to claim 3, wherein the in a case that the multiple sets of configuration information are configured using the system message and the radio resource control signaling, using, by the terminal, a reference signal configuration configured in the radio resource control signaling comprises:
in a case that the multiple sets of configuration information are configured using the system message and the radio resource control signaling and that the terminal satisfies a first preset condition, using, by the terminal, the reference signal configuration configured in the radio resource control signaling; wherein
the first preset condition comprises at least one of the following: being within a preset time after reception of the configuration information or being before a preset timer expires, the number of cell selections and/or reselections of the terminal after reception of the configuration information being less than or equal to a first number threshold, no tracking area update occurring after reception of the configuration information, and no radio access network notification area update occurring after reception of the configuration information.

5. The reference signal configuration method according to claim 3, further comprising:
in the case that the terminal uses the reference signal configuration configured in the radio resource control signaling, for a configuration parameter not comprised in the reference signal configuration in the radio resource control signaling, using, by the terminal, a reference signal configuration configured in the system message.

6. The reference signal configuration method according to claim 2, wherein the determining, according to a preset rule, a reference signal configuration to be used by the terminal from the multiple sets of configuration information comprises:
in a case that the multiple sets of configuration information are configured using the system message and the radio resource control signaling, using, by the terminal, a reference signal configuration configured in the system message.

7. The reference signal configuration method according to claim 6, wherein the in a case that the multiple sets of configuration information are configured using the system message and the radio resource control signaling, using, by the terminal, a reference signal configuration configured in the system message comprises:
in a case that the multiple sets of configuration information are configured using the system message and the radio resource control signaling and that the terminal satisfies a second preset condition, using, by the terminal, the reference signal configuration configured in the system message; wherein
the second preset condition comprises at least one of the following: being after a preset time after reception of the configuration information or being after a preset timer expires, the number of cell selections and/or reselections of the terminal after reception of the configuration information being greater than a second number threshold, tracking area update occurring after reception of the configuration information, and radio access network notification area update occurring after reception of the configuration information.

8. The reference signal configuration method according to claim 6, further comprising:
in the case that the terminal uses the reference signal configuration configured in the system message, for a configuration parameter not comprised in the reference signal configuration in the system message, using, by the terminal, a reference signal configuration configured in the radio resource control signaling.

9. The reference signal configuration method according to claim 2, wherein the determining, according to a preset rule, a reference signal configuration to be used by the terminal from the multiple sets of configuration information comprises:
in a case that the multiple sets of configuration information are configured using the paging message and the radio resource control signaling, using, by the terminal, a reference signal configuration configured in the radio resource control signaling.

10. The reference signal configuration method according to claim 9, wherein the in a case that the multiple sets of configuration information are configured using the paging message and the radio resource control signaling, using, by the terminal, a reference signal configuration configured in the radio resource control signaling comprises:
in a case that the multiple sets of configuration information are configured using the paging message and the radio resource control signaling and that the terminal satisfies a third preset condition, using, by the terminal, the reference signal configuration configured in the radio resource control signaling; wherein
the third preset condition comprises at least one of the following: being within a preset time after reception of the configuration information or being before a preset timer expires, the number of cell selections and/or reselections of the terminal after reception of the configuration information being less than or equal to a third number threshold, no tracking area update occurring after reception of the configuration information, no radio access network notification area update occurring after reception of the configuration information, and no system message change indication or short message indication being received after reception of the configuration information.

11. The reference signal configuration method according to claim 9, further comprising:
in the case that the terminal uses the reference signal configuration configured in the radio resource control signaling, for a configuration parameter not comprised in the reference signal configuration in the radio resource control signaling, using, by the terminal, a reference signal configuration configured in the paging message.

12. The reference signal configuration method according to claim 2, wherein the determining, according to a preset rule, a reference signal configuration to be used by the terminal from the multiple sets of configuration information comprises:
in a case that the multiple sets of configuration information are configured using the paging message and the radio resource control signaling, using, by the terminal, a reference signal configuration configured in the paging message.

13. The reference signal configuration method according to claim 12, wherein the in a case that the multiple sets of configuration information are configured using the paging message and the radio resource control signaling, using, by the terminal, a reference signal configuration configured in the paging message comprises:
in a case that the multiple sets of configuration information are configured using the paging message and the radio resource control signaling and that the terminal satisfies a fourth preset condition, using, by the terminal, the reference signal configuration configured in the paging message; wherein
the fourth preset condition comprises at least one of the following: being after a preset time after reception of the configuration information or being after a preset timer expires, the number of cell selections and/or reselections of the terminal after reception of the configuration information being greater than a fourth number threshold, tracking area update occurring after reception of the configuration information, radio access network notification area update occurring after reception of the configuration information, and being after reception of the configuration information and after a system message change indication or short message indication is received.

14. The reference signal configuration method according to claim 12, further comprising:
in the case that the terminal uses the reference signal configuration configured in the paging message, for a configuration parameter not comprised in the reference signal configuration in the paging message, using, by the terminal, a reference signal configuration configured in the radio resource control signaling.

15. The reference signal configuration method according to any one of claims 2 to 14, wherein
the radio resource control signaling comprises at least one of the following: radio resource control release message, radio resource control suspend message, radio resource control configuration message, and radio resource control reconfiguration message.

16. The reference signal configuration method according to claim 2, wherein the determining, according to a preset rule, a reference signal configuration to be used by the terminal from the multiple sets of configuration information comprises:
in a case that the multiple sets of configuration information are configured using the system message and the paging message, using, by the terminal, a reference signal configuration configured in the paging message.

17. The reference signal configuration method according to claim 16, wherein the in a case that the multiple sets of configuration information are configured using the system message and the paging message, using, by the terminal, a reference signal configuration configured in the paging message comprises:
in a case that the multiple sets of configuration information are configured using the system message and the paging message and that the terminal satisfies a fifth preset condition, using, by the terminal, the reference signal configuration configured in the paging message; wherein
the fifth preset condition comprises at least one of the following: being within a preset time after reception of the configuration information or being before a preset timer expires, the number of cell selections and/or reselections of the terminal after reception of the configuration information being less than or equal to a fifth number threshold, no tracking area update occurring after reception of the configuration information, no radio access network notification area update occurring after reception of the configuration information, and no system message change indication or short message indication being received after reception of the configuration information.

18. The reference signal configuration method according to claim 16, further comprising:
in the case that the terminal uses the reference signal configuration configured in the paging message, for a configuration parameter not comprised in the reference signal configuration in the paging message, using, by the terminal, a reference signal configuration configured in the system message.

19. The reference signal configuration method according to claim 2, wherein the determining, according to a preset rule, a reference signal configuration to be used by the terminal from the multiple sets of configuration information comprises:
in a case that the multiple sets of configuration information are configured using the system message and the paging message, using, by the terminal, a reference signal configuration configured in the system message.

20. The reference signal configuration method according to claim 19, wherein the in a case that the multiple sets of configuration information are configured using the system message and the paging message, using, by the terminal, a reference signal configuration configured in the system message comprises:
in a case that the multiple sets of configuration information are configured using the system message and the paging message and that the terminal satisfies a sixth preset condition, using, by the terminal, the reference signal configuration configured in the system message; wherein
the sixth preset condition comprises at least one of the following: being after a preset time after reception of the configuration information or being after a preset timer expires, the number of cell selections and/or reselections of the terminal after reception of the configuration information being greater than a sixth number threshold, tracking area update occurring after reception of the configuration information, radio access network notification area update occurring after reception of the configuration information, and being after reception of the configuration information and after a system message change indication or short message indication is received.

21. The reference signal configuration method according to claim 19, further comprising:
in the case that the terminal uses the reference signal configuration configured in the system message, for a configuration parameter not comprised in the reference signal configuration in the system message, using, by the terminal, a reference signal configuration configured in the paging message.

22. The reference signal configuration method according to claim 1, wherein the determining, according to a preset rule, a reference signal configuration to be used by the terminal from the multiple sets of configuration information comprises:
using a first indication to indicate configuration information to be used by the terminal.

23. The reference signal configuration method according to claim 22, wherein
the first indication is carried in at least one of the following information: system message, advance indication signal, downlink control information for a paging message, physical downlink shared channel for a paging message, radio resource control release message, radio resource control suspend message, radio resource control configuration message, and radio resource control reconfiguration message.

24. The reference signal configuration method according to claim 1, wherein the configuration information comprises some or all of configuration parameters of the reference signal.

25. The reference signal configuration method according to claim 24, further comprising:
transforming a reference signal configuration currently used by the terminal by using the some or all of the configuration parameters of the reference signal.

26. The reference signal configuration method according to claim 1, wherein the reference signal is a reference signal configured by a network for a terminal in a connected state.

27. The reference signal configuration method according to claim 26, wherein the reference signal comprises at least one of the following: channel state information reference signal, demodulation reference signal, tracking reference signal, positioning reference signal, and second synchronization system information block, the second synchronization system information block being different from a first synchronization system information block received by a terminal in an idle state.

28. A reference signal configuration apparatus, applied to a terminal, wherein the configuration apparatus comprises:
a receiving unit configured to receive multiple sets of configuration information; and
a determining unit configured to determine, according to a preset rule, a reference signal configuration to be used by the terminal from the multiple sets of configuration information.

29. An electronic device, comprising a processor, a memory, and a program or instructions stored in the memory and capable of running on the processor, wherein when the program or the instructions are executed by the processor, the steps of the reference signal configuration method according to any one of claims 1 to 27 are implemented.

30. A readable storage medium, wherein the readable storage medium stores a program or instructions, and when the program or the instructions are executed by a processor, the steps of the reference signal configuration method according to any one of claims 1 to 27 are implemented.

31. A chip, comprising a processor and a communication interface, wherein the communication interface is coupled to the processor, and the processor is configured to run a program or instructions to implement the steps of the reference signal configuration method according to any one of claims 1 to 27.

32. A computer program product, wherein the computer program product is stored in a non-volatile storage medium, and the computer program product is executed by at least one processor to implement the steps of the reference signal configuration method according to any one of claims 1 to 27.
